# EUROPEAN PATENT APPLICATION

(11) **EP 4 512 289 A1**
(43) Date of publication of application: **26.02.2025**
(21) Application number: 23193586.7
(22) Date of filing: 25.08.2023
(51) Int. Cl.: A47J 43/046, A47J 43/08

(54) **FOOD PREPARATION DEVICE AND FOOD PREPARATION ASSEMBLY COMPRISING THE SAME**

(71) Applicant: Versuni Holding B.V., 5656 AE Eindhoven (NL)
(72) Inventor: VAUPOT, Jan, 5656 AE Eindhoven (NL); HIETBRINK, Ingrid, 5656 AE Eindhoven (NL); STREISSNIG, Christian, 5656 AE Eindhoven (NL)
(74) Representative: Vollering, Stefanus Franciscus Maria

(57) **Abstract**

Provided is a food preparation device (100) comprising a motor assembly (104, 106). The motor assembly comprises a higher speed motor (104) and a lower speed motor (106). The food preparation device also comprises a magnetic coupling (102) for coupling the motor assembly to at least one magnetically couplable food utensil (108). The higher speed motor and the lower speed motor enable the magnetic coupling to be driven at different speeds. Further provided is a food preparation assembly (113) comprising the food preparation device and the at least one magnetically couplable food utensil.

## Description

### FIELD OF THE INVENTION

The present invention relates to a food preparation device comprising a magnetic coupling for coupling a motor assembly and at least one magnetically couplable food utensil to each other so that the at least one magnetically couplable food utensil is moveable by the motor assembly via the magnetic coupling. Further provided is a food preparation assembly comprising the food preparation device and the at least one magnetically couplable food utensil.

### BACKGROUND OF THE INVENTION

Kitchen appliances are known that enable a user to perform various types of food preparation, such as food processing and cooking, using the same dedicated pot. Such kitchen appliances may also include an integrated weighing scale. Step-by-step guidance can be provided for assisting the user to cook various recipes using such a kitchen appliance.

Certain kitchen appliances include a dedicated pot with an integral thick film heater in a base of the pot and a rotatable tool, such as a blender tool, in other words blender knife, arranged in the center of the pot. Such a blender tool may be connected to a motor in a base station of the kitchen appliance via a mechanical coupling.

### SUMMARY OF THE INVENTION

The invention is defined by the claims.

According to examples in accordance with an aspect of the invention, there is provided a food preparation device comprising: a motor assembly comprising a higher speed motor and a lower speed motor; and a magnetic coupling for coupling the motor assembly to at least one magnetically couplable food utensil, the higher speed motor and the lower speed motor being configured to enable the magnetic coupling to be driven at different speeds.

The magnetic coupling may provide a relatively straightforward way of driving movement of the magnetically couplable food utensil(s) since no mechanical engagement with the motor assembly may be required beyond positioning the magnetically couplable food utensil(s) with respect to the magnetic coupling.

The magnetically couplable food utensil(s) may, for example, be detachable from the food preparation device by moving the magnetically couplable food utensil(s) away from the magnetic coupling.

This may enable facile switching of a first magnetically couplable food utensil for a second magnetically couplable food utensil by moving the former away from the magnetic coupling and positioning the latter with respect to the magnetic coupling so as to enable the second magnetically couplable food utensil to be moveable by the motor assembly via the magnetic coupling.

Inclusion of the higher speed motor and the lower speed motor in the motor assembly may assist to deliver appropriate rotational speeds needed for certain applications, e.g. types of magnetically couplable food utensil. Moreover, standard AC and/or DC motors may be used for the higher speed motor and the lower speed motor that may not require complex electronics to operate. Rather, a simple on/off switch may be used to operate each of the higher speed motor and the lower speed motor.

Such standard motors may contrast with, for example, brushless DC motors that may require complex electronics to be able to run. Therefore the above-mentioned standard motors may be easier and cheaper to implement in the food preparation device than brushless DC motors.

Implementing the different speeds for driving the magnetic coupling may comprise operating, e.g. switching on, either the higher speed motor or the lower speed motor.

When the higher speed motor is operating, e.g. switched on, and the lower speed motor is not operating, e.g. due to being switched off, the magnetic coupling may be driven at a higher speed than when the lower speed motor is being operated and the higher speed motor is not operating.

In some embodiments, a single magnetic assembly is included in the magnetic coupling, and the higher speed motor and the lower speed motor are selectable to drive movement, e.g. rotation, of the single magnetic assembly.

In such embodiments, automatic selection, e.g. switching, between which of the lower and higher speed motors drives movement, e.g. rotation, of the single magnetic assembly may, for instance, be realized by automatic detection of the magnetically couplable food utensil.

In some embodiments, the food preparation device comprises a gear assembly for transferring torque from the motor assembly to the magnetic coupling. Such a gear assembly may further assist to ensure that the magnetically couplable food utensil(s) is or are driven by the motor assembly via the magnetic coupling at appropriate speed(s).

In some embodiments, the food preparation device comprises one or more switchable gear assemblies for adjusting speed at which the magnetic coupling is driven by the motor assembly, e.g. for adjusting speed at which magnetic assembly(ies) of the magnetic coupling is or are driven by the motor assembly.

Such switchable gear assembly(ies) may assist to broaden the range of speed at which the magnetic coupling is driven.

In some embodiments, the gear assembly comprises a planetary gear assembly. Such a planetary gear assembly may offer a simple yet effective way of rotating parts of the magnetic coupling at different speeds relative to each other.

The planetary gear assembly may include a sun gear, a ring gear and a plurality of planet gears coupling the sun gear and the ring gear to each other. The planetary gear assembly may be configured so that the ring gear, in other words outer wall of the planetary gear box, rotates more slowly than sun gear, in other words central shaft of the planetary gear box.

The higher speed motor and the lower speed motor in combination with the planetary gear assembly may enable the food preparation device to provide (at least) four different rotational speeds for driving the magnetic coupling.

In some embodiments, the food preparation device comprises a belt or chain configured to couple the motor assembly to the magnetic coupling. Belt transmission may assist to minimize the food preparation device's height, since the motor assembly may be arranged to a side of the magnetic coupling, rather than underneath the magnetic coupling.

It is noted that the term "height" in this context may refer, for example, to how far the food preparation device extends upwardly from a kitchen countertop on which the food preparation device is disposed. A relatively low height of the food preparation device enabled by the belt transmission can assist to make the food preparation device, e.g. the food preparation device in the form of a base station, easier to store.

In some embodiments, the belt or chain, e.g. timing belt or timing chain, couples respective output shafts of the higher speed motor and the lower speed motor with each other and with the magnetic coupling, for instance via the gear assembly.

Alternatively or additionally, a free run bearing may be coupled to a first output shaft of the lower speed motor and configured to enable the lower speed motor to be bypassed when the higher speed motor is operating; and/or a free run bearing may be coupled to a second output shaft of the higher speed motor and configured to enable the higher speed motor to be bypassed when the lower speed motor is operating.

In embodiments in which a free run bearing is coupled to the first output shaft of the lower speed motor and a free run bearing is coupled to the second output shaft of the higher speed motor, the free run bearings may be differently oriented.

The free run bearing may minimize the risk of, e.g. prevent, interaction between the lower and higher speed motors that may potentially block rotation.

In some embodiments, the lower speed motor may only rotate its output shaft when the lower speed motor is being operated.

The higher speed motor may be configured to rotate at 15000 to 50000, e.g. about 20000, revolutions per minute. Alternatively or additionally, the lower speed motor 106 may be configured to rotate at 2 to 10, e.g. about 5 revolutions per minute.

In some embodiments, the magnetic coupling comprises a first magnetic assembly and a second magnetic assembly.

The first and second magnetic assemblies may facilitate the food preparation device to provide different food preparation functionalities.

In some embodiments, the first and second magnetic assemblies are magnetically shielded and/or spaced from each other to permit relative movement of the first and second magnetic assemblies with respect to each other and corresponding movement of the at least one magnetically couplable utensil for processing food.

Movement of one or both of the first and second magnetic assemblies causes a corresponding movement of the magnetically couplable food utensil, which corresponding movement is for processing food. The first and second magnetic assemblies being magnetically shielded and/or spaced from each other permits relative movement of the first and second magnetic assemblies with respect to each other and the corresponding movement of the magnetically couplable food utensil, which corresponding movement is for processing food.

The first and second magnetic assemblies being magnetically shielded and/or spaced from each other to permit relative movement of the first and second magnetic assemblies with respect to each other may, for example, mean that one of the first and second magnetic assemblies is permitted to remain stationary while the other of the first and second magnetic assemblies moves, or both of the first and second magnetic assemblies are permitted to move but at different speeds and/or in different directions relative to each other.

In some embodiments, the first magnetic assembly and the second magnetic assembly are driven by the motor assembly with different rotational speeds and/or torques, e.g. at the same time as each other.

Alternatively or additionally, the magnetic coupling may enable different types of magnetically couplable food utensil to be driven by the motor assembly.

In some embodiments, one of the first and second magnetic assemblies may be coupled, e.g. directly coupled, to the ring gear of the planetary gear assembly, and thus may be rotated more slowly than the other of the first and second magnetic assemblies coupled, e.g. directly coupled, to the sun gear.

The first and second magnetic assemblies may be separated from each other by a spacing, in other words a gap. Such a spacing may permit movement of one of the first and second magnetic assemblies without interference by the other of the first and second magnetic assemblies, and vice versa. In particular, the spacing may assist to minimize, or in some cases prevent, magnetic interaction between the first and second magnetic assemblies.

However, magnetically shielding the first and second magnetic assemblies from each other, e.g. by arranging a magnetic shielding material for providing magnetic shielding between the first and second magnetic assemblies, may enable the magnetic coupling to be made more compact because the spacing alone is not relied upon to enable relative movement of the first and second magnetic assemblies with respect to each other.

Any suitable magnetic shielding material can be employed for this purpose. In some embodiments, the magnetic shielding material comprises soft iron, e.g. iron or ferritic steel.

In some embodiments, the magnetic shielding material comprises a magnetic shielding material member included in and moveable together with the second magnetic assembly. Alternatively or additionally, the magnetic shielding material may comprise a magnetic shielding material element included in and moveable together with the first magnetic assembly.

In some embodiments, one of the first and second magnetic assemblies is arranged around the other of the first and second magnetic assemblies. This may provide a relatively compact arrangement of the first and second magnetic assemblies that, in turn, can assist to reduce the space occupied by the food preparation device.

The first and second magnetic assemblies may each be rotatable about a common axis of rotation. As well as assisting to make the food preparation device more compact, this design may facilitate driving of rotation of the first and second magnetic assemblies by the motor assembly.

In some embodiments, the magnetic coupling is a permanent magnetic coupling, in other words a magnetic coupling comprising one or more permanent magnets.

Such a permanent magnetic coupling may be more straightforwardly implementable than, for instance, an electromagnet-comprising magnetic coupling. It is nonetheless noted that electromagnetic-comprising magnetic coupling is within the meaning of the term "magnetic coupling" as used herein.

Alternatively or additionally, the transmission of rotation from the magnetic coupling may be in an axial direction, perpendicular to a plane in which the first and second magnetic assemblies move, e.g. rotate.

This may facilitate magnetic connection between the magnetic coupling and the magnetically couplable food utensil.

In some embodiments, the first magnetic assembly comprises a plurality of first permanent magnets spaced apart from each other, for example with north poles of neighboring first permanent magnets in the first magnetic assembly being orientated in opposite directions relative to each other. Alternatively or additionally, the second magnetic assembly may comprise a plurality of second permanent magnets spaced apart from each other, for example with north poles of neighboring second permanent magnets in the second magnetic assembly being orientated in opposite directions relative to each other.

In such embodiments, the plurality of first permanent magnetics or the plurality of second permanent magnets may be couplable to a plurality of permanent magnets included in the magnetically couplable food utensil.

The number of permanent magnets in the plurality of first permanent magnets may be different from the number of permanent magnets in the plurality of second permanent magnets. This may enable different forces, e.g. torques, to be transmitted by the first and second magnetic assemblies. For example, by the number of permanent magnets in the plurality of second permanent magnets being greater than the number of permanent magnets in the plurality of first permanent magnets, the force, e.g. torque, transmitted by the second magnetic assembly may be greater than that transmitted by the first magnetic assembly.

This greater force, e.g. torque, transmitted by the second magnetic assembly may be of particular assistance for moving certain types of food implement, such as a stirrer, e.g. a stirrer for stirring risotto.

In some embodiments, the magnetic coupling further comprises a third magnetic assembly (or more magnetic assemblies), with the first, second and third magnetic assemblies being magnetically shielded and/or spaced from each other to permit, as well as the relative movement of the first and second magnetic assemblies, relative movement of the second and third magnetic assembies with respect to each other and relative movement of the first and third magnetic assemblies with respect to each other.

In such embodiments, the third magnetic assembly may be arranged about the second magnetic assembly, with the second magnetic assembly being arranged about the first magnetic assembly, for example such that each of the first, second and third magnetic assemblies are concentrically arranged and rotatable about a common axis.

In some embodiments, the food preparation device comprises a support base on which the at least one magnetically couplable food utensil is supportable, with the support base being configured to enable the magnetic coupling to be magnetically couplable with the at least one magnetically couplable food utensil through the support base so that the at least one magnetically couplable food utensil is, when supported by the support base, moveable via the magnetic coupling.

Implicit in this magnetic coupling is that the support base is formed from a magnetically permeable material, such as from one or more of glass, aluminum, austenitic stainless steel and plastic. Particular mention is made of the support base being formed from glass, e.g. glass-ceramic.

Glass may have various benefits in addition to being magnetically permeable, such as being relatively easy to clean, and being compatible with a heating element, e.g. an induction heating element, arranged adjacent to the support base.

More generally, the food preparation device may include a heating element for enabling the food preparation device to heat food. Thus, the food preparation device may combine physical manipulation of food via the magnetic coupling with heating of the food. It is also noted that the contactless coupling with the motor assembly provided by the magnetic coupling may enable a receptacle, such as pot, pan, mug, etc., to be heated by the heating element even when a magnetically couplable food utensil is not being used. Thus, the food preparation device can be used in combination with, for example, existing kitchenware.

The heating element may be of any suitable type. In some embodiments, the heating element comprises, e.g. is, an induction heating element. Such an induction heating element may enable food to be heated with minimal impact of operation of the induction heating element on functioning of moving parts, such as the motor assembly and the magnetic coupling. This is because induction heating does not rely on conduction of heat generated in the induction heating element itself.

The heating element may be arranged around the magnetic coupling, for example, by the induction coil of the induction heating element being arranged around the magnetic coupling. This may enable the heating functionality to be incorporated into the food preparation device in a spatially efficient manner.

In some embodiments, the food preparation device includes a temperature sensor assembly configured to provide a temperature response for controlling the heating element. The temperature sensor assembly may, for example, include a temperature sensor for providing data for temperature feedback control and/or a thermal fuse for protecting against overheating.

In some embodiments, the temperature sensor assembly, e.g. at least the temperature sensor thereof, may be interposed between the heating element and the magnetic coupling, for example with temperature sensing element(s) of the temperature sensor assembly being in contact with the support base. This may assist to minimize the risk of magnetic fields interfering with operation of the temperature sensor assembly.

More generally, the food preparation device may be portable, in other words mobile. Alternatively, the food preparation device may be a stand alone or built-in food preparation device.

The food preparation device, e.g. portable food preparation device, may be in the form of a base station capable of contactlessly driving several magnetically couplable food utensils, and, in some embodiments, capable of heating food via inductive heating.

According to another aspect there is provided a food preparation assembly comprising: the food preparation device according to any of the embodiments described herein; and at least one magnetically couplable food utensil to which the magnetic coupling of the food preparation device is couplable to enable the at least one magnetically couplable food utensil to be moveable by the motor assembly via the magnetic coupling.

In some embodiments, the at least one magnetically couplable food utensil comprises a first magnetically couplable food utensil couplable to the magnetic coupling, e.g. the first magnetic assembly; and a second magnetically couplable food utensil, different from the first magnetically couplable food utensil, couplable to the magnetic coupling, e.g. to the second magnetic assembly.

The at least one magnetically couplable food utensil may include a food implement for contacting and processing food. Movement, e.g. rotation, of the food implement to process food may be driven by the motor assembly via the magnetic coupling. This may be achieved, for example, by the motor assembly driving movement, e.g. rotation, of the magnetic coupling, and a utensil magnetic assembly of the magnetically couplable food utensil transferring the movement of the magnetic coupling to the food implement.

The food implement can be of any suitable design. In some embodiments, the food implement is in the form of a food processing tool, a blender tool, a stirrer tool, a cutter, a dough kneader, a stirrer, or a mixer.

The above-mentioned first and second magnetically couplable food utensils may be different from each other at least due to them including different food implements.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a food preparation assembly according to a first example;
FIG. 2 schematically depicts a food preparation assembly according to a second example;
FIGs. 3A and 3B provide views of a magnetic coupling according to a first example;
FIG. 4 schematically illustrates a magnetic shielding material's effect on magnetic field between magnetic assemblies of a magnetic coupling;
FIG. 5 shows magnetic field lines between a magnetic coupling according to the first example and part of a magnetically couplable food utensil;
FIG. 6 shows magnetic field lines between a magnetic coupling according to the first example and part of another magnetically couplable food utensil;
FIG. 7 schematically depicts a magnetic coupling according to a second example;
FIG. 8 provides a plan view of a heating element and the magnetic coupling according to the first example;
FIG. 9 schematically depicts a food preparation assembly according to a third example;
FIG. 10 schematically depicts a food preparation assembly according to a fourth example;
FIG. 11 schematically depicts a food preparation assembly according to a fifth example;
FIG. 12 schematically depicts a food preparation assembly according to a sixth example;
FIG. 13 schematically depicts a food preparation assembly according to a seventh example;
FIG. 14 schematically depicts a food preparation assembly according to an eighth example;
FIG. 15 schematically depicts a food preparation assembly according to a ninth example;
FIG. 16 schematically depicts a magnetic coupling according to a third example;
FIG. 17 schematically depicts a magnetic coupling according to a fourth example and part of a magnetically couplable food utensil;
FIG. 18 schematically depicts a magnetic coupling according to a fifth example and part of a magnetically couplable food utensil; and
FIG. 19 schematically depicts a magnetic coupling according to a sixth example and part of a magnetically couplable food utensil.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a food preparation device comprising a motor assembly. The motor assembly comprises a higher speed motor and a lower speed motor. The food preparation device also comprises a magnetic coupling for coupling the motor assembly to at least one magnetically couplable food utensil. The higher speed motor and the lower speed motor enable the magnetic coupling to be driven at different speeds. Further provided is a food preparation assembly comprising the food preparation device and the at least one magnetically couplable food utensil.

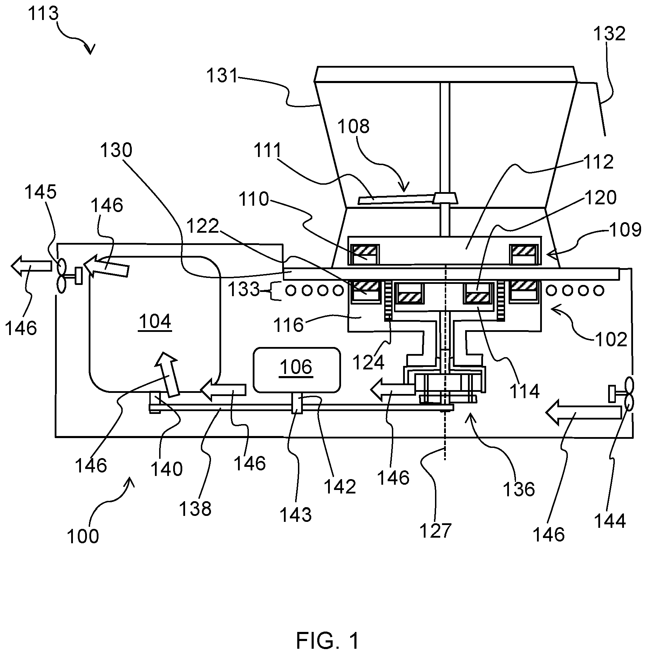

FIG. 1 schematically depicts a food preparation device 100 according to an example. The food preparation device 100 comprises a magnetic coupling 102 for coupling a motor assembly 104, 106 and at least one magnetically couplable food utensil 108 to each other so that the at least one magnetically couplable food utensil 108 is moveable by the motor assembly 104, 106 via the magnetic coupling 102.

The magnetic coupling 102 may provide a relatively straightforward way of driving movement of the magnetically couplable food utensil 108 since no mechanical engagement with the motor assembly 104, 106 may be required beyond positioning the magnetically couplable food utensil 108 with respect to the magnetic coupling 102. The magnetically couplable food utensil(s) 108 may, for example, be detachable from the food preparation device 100 by moving the magnetically couplable food utensil(s) 108 away from the magnetic coupling 102.

This may enable facile switching of a first magnetically couplable food utensil 108 for a second magnetically couplable food utensil 108 by moving the former away from the magnetic coupling 102 and positioning the latter with respect to the magnetic coupling 102 so as to enable the second magnetically couplable food utensil 108 to be moveable by the motor assembly 104, 106 via the magnetic coupling 102. This is described in more detail herein below with reference to various illustrative non-limiting examples.

In some embodiments, the, e.g. each of the, at least one magnetically couplable food utensil 108 comprises a utensil magnetic assembly 109 that is magnetically couplable to the magnetic coupling 102 and moveable by movement of the magnetic coupling 102.

The magnetic connection between the at least one magnetically couplable food utensil 108 and the magnetic coupling 102 may be contactless, for instance so that moving parts of the magnetic coupling 102 do not come into contact with moving part(s), e.g. the utensil magnetic assembly 109, of the magnetically couplable food utensil(s) 108.

In some embodiments, the utensil magnetic assembly 109 includes a plurality of permanent magnets 110 spaced apart from each other and configured to magnetically couple with the magnetic coupling 102.

The at least one magnetically couplable food utensil 108 may include a food implement 111 for contacting and processing food. Movement, e.g. rotation, of the food implement 111 to process food may be driven by the motor assembly 104, 106 via the magnetic coupling 102. This may be achieved, for example, by the motor assembly 104, 106 driving movement, e.g. rotation, of the magnetic coupling 102, and the utensil magnetic assembly 109 transferring the movement of the magnetic coupling 102 to the food implement 111.

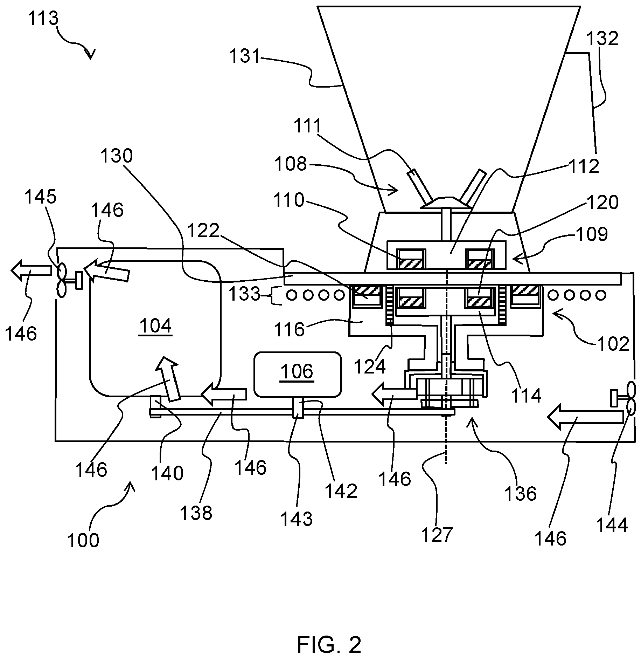

The food implement 111 can be of any suitable type and design. In some embodiments, the food implement 111 is in the form of a food processing tool (see FIG. 1), a blender tool (see FIG. 2), a stirrer tool, a cutter, a dough kneader, a stirrer, or a mixer.

The utensil magnetic assembly 109 may include a holder 112 for holding magnetic material, e.g. the plurality of permanent magnets 110.

The holder 112 may be formed from a magnetically permeable material, such as from one or more of aluminum, austenitic stainless steel and plastic.

It is noted at this point that the food preparation device 100 may be supplied to a user without the magnetically couplable food utensil 108, for example in a scenario in which the user is already in possession of the magnetically couplable food utensil 108 or has sourced the magnetically couplable food utensil 108 separately from the food preparation device 100. In other embodiments, the food preparation device 100 and the magnetically couplable food utensil(s) 108 are included in a food preparation assembly 113. Such a food preparation assembly 113 may mean that the user can be conveniently supplied with both the food preparation device 100 and the magnetically couplable food utensil(s) 108.

The food preparation assembly 113 may, for example, be assembled by the user by positioning the magnetically couplable food utensil(s) 108 with respect to the magnetic coupling 102 so as to enable the magnetically couplable food utensil(s) 108 to be moveable by the motor assembly 104, 106 via the magnetic coupling 102.

In some embodiments, the magnetic coupling 102 is a permanent magnetic coupling, in other words a magnetic coupling 102 comprising one or more permanent magnets.

In some embodiments, and with continued reference to FIG. 1, the magnetic coupling 102 comprises a first magnetic assembly 114 and a second magnetic assembly 116, with the first and second magnetic assemblies 114, 116 being magnetically shielded and/or spaced from each other to permit relative movement of the first and second magnetic assemblies 114, 116 with respect to each other, for example to permit one of the first and second magnetic assemblies 114, 116 to remain stationary while the other of the first and second magnetic assemblies 116, 114 moves, or to permit both of the first and second magnetic assemblies 114, 116 to move but at different speeds and/or in different directions relative to each other.

The magnetic coupling 102 may permit the first magnetic assembly 114 and the second magnetic assembly 116 to be driven by the motor assembly 104, 106 with different rotational speeds and/or torques, e.g. at the same time as each other.

The magnetic shielding and/or spacing also implicitly permits the first and second magnetic assemblies 114, 116 to be moved together with each other, for example by being moved, e.g. rotated, at the same speed as each other, provided that the motor assembly 104, 106 is able to drive simultaneous movement of the first and second magnetic assemblies 114, 116 at the same speed as each other.

The magnetic coupling 102 may enable different types of magnetically couplable food utensil 108 to be driven by the motor assembly 104, 106. By way of illustration, FIG. 1 schematically depicts a magnetically couplable food utensil 108 comprising a food implement 111 in the form of a food processing tool being driven via the second magnetic assembly 116 of the magnetic coupling 102, whereas FIG. 2 schematically depicts a magnetically couplable food utensil 108 comprising a food implement 111 in the form of a blender tool being driven via the first magnetic assembly 114 of the magnetic coupling 102.

The transmission of rotation from the magnetic coupling 102 may be in an axial direction, perpendicular to a plane in which the first and second magnetic assemblies 114, 116 move, e.g. rotate.

The first and second magnetic assemblies 114, 116 can be configured in any suitable manner providing that they are couplable to the at least one magnetically couplable food utensil 108, e.g. to the utensil magnetic assembly 109 thereof. In some embodiments, such as shown in FIGs. 1, 2, 3A and 3B, the first magnetic assembly 114 comprises a plurality of first permanent magnets 120 spaced apart from each other, for example with north poles of neighboring first permanent magnets 120 in the first magnetic assembly 114 being orientated in opposite directions relative to each other. It is noted that the respective poles of each of the first permanent magnets 120 are denoted in these Figures by a patterned portion and a non-patterned portion.

Alternatively or additionally, the second magnetic assembly 116 may comprise a plurality of second permanent magnets 122 spaced apart from each other, for example with north poles of neighboring second permanent magnets 122 in the second magnetic assembly 116 being orientated in opposite directions relative to each other. It is noted that the respective poles of each of the second permanent magnets 122 are also denoted by a patterned portion and a non-patterned portion.

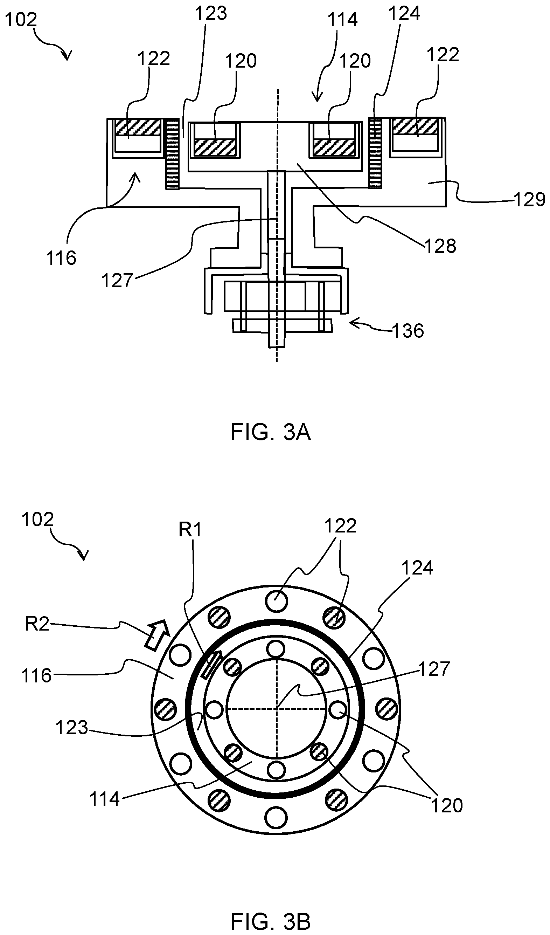

In some embodiments, and as best shown in FIG. 3B, the number of permanent magnets in the plurality of first permanent magnets 120 is different from the number of permanent magnets in the plurality of second permanent magnets 122. This may enable different forces, e.g. torques, to be transmitted by the first and second magnetic assemblies 114, 116. For example, by the number of permanent magnets in the plurality of second permanent magnets 122 being greater than the number of permanent magnets in the plurality of first permanent magnets 120, the force, e.g. torque, transmitted by the second magnetic assembly 116 may be greater than that transmitted by the first magnetic assembly 114. This greater force, e.g. torque, transmitted by the second magnetic assembly 116 may be of particular assistance for moving certain types of food implement 111, such as a stirrer, e.g. a stirrer for stirring risotto.

More generally, and referring to FIGs. 3A and 3B, the first and second magnetic assemblies 114, 116 may be separated from each other by a spacing 123, in other words a gap. Such a spacing 123 may permit movement of one of the first and second magnetic assemblies 114, 116 without interference by the other of the first and second magnetic assemblies 116, 114, and vice versa. In particular, the spacing 123 may assist to minimize, or in some cases prevent, magnetic interaction between the first and second magnetic assemblies 114, 116.

The spacing 123, e.g. radial spacing 123, between the first and second magnetic assemblies 114, 116 may be larger than an axial spacing between the magnetic coupling 102 and the utensil magnetic assembly 109.

In this manner, the magnetic field of one of the first and second magnetic assemblies 114, 116 may connect to the utensil magnetic assembly 109 rather than to the other of the first and second magnetic assemblies 116, 114.

However, magnetically shielding the first and second magnetic assemblies 114, 116 from each other, e.g. by arranging a magnetic shielding material member 124 for providing magnetic shielding between the first and second magnetic assemblies 114, 116, may enable the magnetic coupling 102 to be made more compact because the spacing 123 alone is not relied upon to permit relative movement of the first and second magnetic assemblies 114, 116 with respect to each other.

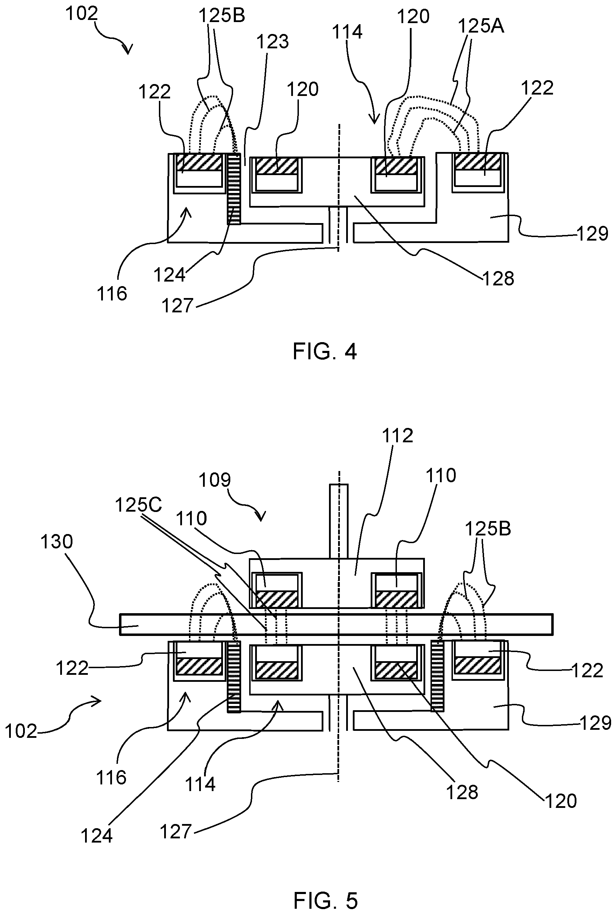

The effect of such magnetic shielding is illustrated in FIG. 4. In particular, the right hand side of FIG. 4 shows magnetic field lines 125A between the first and second magnetic assemblies 114, 116, and in particular between first and second permanent magnets 120, 122, where no magnetic shielding is provided therebetween. The magnetic field lines 125A illustrate how magnetic interaction between the first and second magnetic assemblies 114, 116 can risk stopping independent movement of the first and second magnetic assemblies 114, 116. However, the left hand side of FIG. 4 illustrates, via magnetic field lines 125B being redirected by the magnetic shielding material member 124, how magnetic shielding, e.g. together with the spacing 123 between the first and second magnetic assemblies 114, 116, can minimize or remove magnetic interaction between the first and second magnetic assemblies 114, 116.

Any suitable magnetic shielding material can be employed for this purpose. In some embodiments, the magnetic shielding material comprises soft iron, e.g. iron or ferritic steel.

In some embodiments, such as shown in FIGs. 3A to 7, the magnetic shielding material member 124 is included in and moveable together with the second magnetic assembly 116.

FIG. 5 shows magnetic field lines 125C between the first magnetic assembly 114 and the at least one magnetically couplable food utensil 108, and in particular between the plurality of first permanent magnets 120 and the plurality of permanent magnets 110 of the utensil magnetic assembly 109. The magnetic connection between the first magnetic assembly 114 and the utensil magnetic assembly 109 enables movement, e.g. rotation, of the first magnetic assembly 114 to cause movement, e.g. rotation, of the utensil magnetic assembly 109. Moreover, FIG. 5 shows magnetic field lines 125B being redirected by the magnetic shielding material member 124 to minimize or remove magnetic interaction between the first and second magnetic assemblies 114, 116.

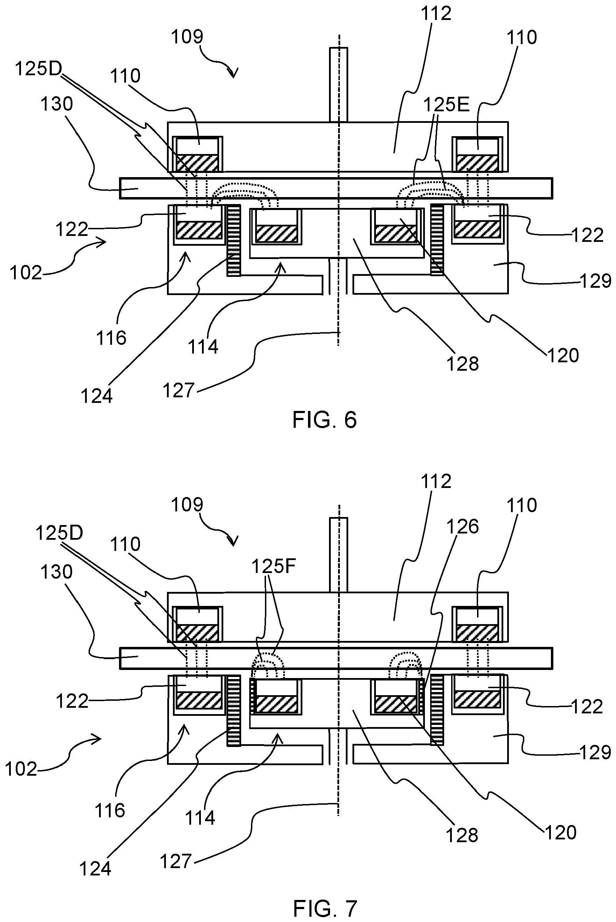

FIG. 6 similarly shows magnetic field lines 125D between the second magnetic assembly 116 and the at least one magnetically couplable food utensil 108, and in particular between the plurality of second permanent magnets 122 and the plurality of permanent magnets 110 of the utensil magnetic assembly 109. FIG. 6 thus illustrates the magnetic connection between the second magnetic assembly 116 and the magnetically couplable food utensil 108.

However, FIG. 6 shows magnetic field lines 125E denoting a residual magnetic interaction between the plurality of second permanent magnets 122 of the second magnetic assembly 116 with the plurality of first permanent magnets 120 of the first magnetic assembly 114, in spite of inclusion of the magnetic shielding material member 124.

Hence in some embodiments, such as shown in FIG. 7, a magnetic shielding material element 126 is included in and moveable together with the first magnetic assembly 114. FIG. 7 shows magnetic field lines 125F being redirected by the magnetic shielding material element 126.

In some embodiments, and as best shown in FIG. 3B, one of the first and second magnetic assemblies 114, 116 is arranged around the other of the first and second magnetic assemblies 116, 114. This may provide a relatively compact arrangement of the first and second magnetic assemblies 114, 116 that, in turn, can assist to reduce the space occupied by the food preparation device 100.

In such embodiments, and referring to FIGs. 1 to 7, the second magnetic assembly 116 may correspond to an outer magnetic assembly 116 that is arranged around an inner magnetic assembly 114 corresponding to the first magnetic assembly 114.

In some embodiments, the inner magnetic assembly 114 may be rotatable within, and independently of, the outer magnetic assembly 116. Such rotation of the inner magnetic assembly 114 is denoted in FIG. 3B by the arrow Rl. Alternatively or additionally, the outer magnetic assembly 116 may be rotatable about, and independently of, the inner magnetic assembly 114. Such rotation of the outer magnetic assembly 116 is denoted in FIG. 3B by the arrow R2.

In some embodiments, such as shown in FIG. 3B, the magnetic shielding material member 124 comprises an annular ring of magnetic shielding material, e.g. soft iron, that extends around the inner magnetic assembly 114, as well as being interposed between the first and second magnetic assemblies 114, 116. The annular ring of magnetic shielding material constituting the magnetic shielding material member 124 may, for example, be included in and moveable together with the second, outer, magnetic assembly 116.

Alternatively or additionally, the magnetic shielding material element 126 may comprise an annular ring of magnetic material, e.g. soft iron, that extends around the inner magnetic assembly 114, as well as being interposed between the first and second magnetic assemblies 114, 116. The annular ring of magnetic shielding material constituting the magnetic shielding material element 126 may, for example, be included in and moveable together with the first, inner, magnetic assembly 114.

In some embodiments, the first and second magnetic assemblies 114, 116 are concentrically arranged, with each of the first and second magnetic assemblies 114, 116 being rotatable about a common axis 127 of rotation. As well as assisting to make the food preparation device 100 more compact, this design may facilitate driving of rotation of the first and second magnetic assemblies 114, 116 by the motor assembly 104, 106. The manner in which torque is transferred from the motor assembly 104, 106 to the magnetic coupling 102 is described in more detail herein below.

In some embodiments, and as best shown in FIG. 3B, the plurality of first permanent magnets 120 and the plurality of second permanent magnets 122 are respectively arranged at different radiuses from the common axis 127.

It is noted at this point, with reference to FIGs. 3A and 4 to 7, that the first magnetic assembly 114 may include a first holder 128 for holding magnetic material, e.g. the plurality of first permanent magnets 120. Alternatively or additionally, the second magnetic assembly 116 may include a second holder 129 for holding magnetic material, e.g. the plurality of second permanent magnets 122.

The first and second holders 128, 129 may each be formed from a magnetically permeable material, such as from one or more of aluminum, austenitic stainless steel and plastic.

Referring to FIGs. 1, 2 and 5 to 7, the food preparation device 100 may comprise a support base 130 on which the at least one magnetically couplable food utensil 108 is supportable, with the support base 130 being configured to enable the magnetic coupling 102 to be magnetically couplable with the magnetically couplable food utensil(s) 108 supported on the support base 130.

In such embodiments, the magnetic coupling may be through the support base 130, as indicated by the magnetic field lines 125C and 125D in FIGs. 5 to 7, so that the magnetically couplable food utensil 108 is moveable via the magnetic coupling 102. Thus, the support base 130 may keep moving parts, e.g. the first and second magnetic assemblies 114, 116, of the magnetic coupling 102 apart from moving part(s) of the magnetically couplable food utensil(s) 108, such as the utensil magnetic assembly 109.

Implicit in this magnetic coupling is that the support base 130 is formed from a magnetically permeable material, such as from one or more of glass, aluminum, austenitic stainless steel and plastic. Particular mention is made of the support base 130 being formed from glass. Glass may have various benefits in addition to being magnetically permeable, such as being compatible with induction heating (see below), being relatively easy to clean, etc.

Any suitable glass, e.g. glass-ceramic, can be used to form the support base 130, for example Ceran^{®} glass from Schott Ceran.

Exterior surfaces of the food preparation device 100 may all be reachable to facilitate cleaning of the exterior of the food preparation device 100. To this end, the external surface of the support base 130 may be a flat surface, e.g. a flat glass surface, and/or the food preparation device 100 may be free of any mechanical interface for mechanically engaging/locking to a food utensil.

It is noted at this point that the food preparation device 100 and the at least one magnetically couplable food utensil 108 may be arranged or arrangeable relative to each other so that axial spacing, e.g. along the common axis 127, between the utensil magnetic assembly 109 and one or both of the first magnetic assembly 114 and the second magnetic assembly 116 is less than 10 mm, for example 4 to 6 mm.

This may assist with transfer of as much force, e.g. torque, as possible to the magnetically couplable food utensil(s) 108, noting that the magnetic force may relatively sharply decrease with increased axial spacing.

The axial spacing between the utensil magnetic assembly 109 and one or both of the first magnetic assembly 114 and the second magnetic assembly 116 may be achieved, at least in part, by minimizing the thickness of the support base 130. In some embodiments, the support base 130 has a thickness less than 8 mm.

It is noted that the magnetic coupling 102 having the concentrically arranged first and second magnetic assemblies 114, 116, e.g. as shown in FIGs. 1 to 7, may be regarded as a coaxial axial flux magnetic coupling 102.

The magnetic coupling 102 may provide multispeed, e.g. dual speed, and/or multi-torque, e.g. dual torque, transmission in the same region of the support base 130 through the magnetically permeable material, e.g. glass.

In some embodiments, such as shown in FIGs. 1, 2 and 5 to 7, the magnetic coupling 102 transmits rotation from a multiple, e.g. concentric, magnetic assembly 114, 116 arrangement to a single utensil magnetic assembly 109.

However, it is noted that the magnetic coupling 102 described herein can be used for transmitting rotation to a further magnetic coupling having a further first magnetic assembly and a further second magnetic assembly, e.g. having the same concentric design as described for embodiments of the magnetic coupling 102. This can be regarded as an example in which rotation is transmitted from a coaxial arrangement to a coaxial arrangement. In other embodiments, a single magnetic assembly may transmit rotation to the magnetic coupling 102 comprising the multiple, e.g. concentric, magnetic assemblies 114, 116.

In some embodiments, and referring again to FIGs. 1 and 2, at least part of the magnetically couplable food utensil 108 is arranged in a utensil housing 131. The utensil housing 131 may, for example, be placed on the support base 130 in order to couple the magnetically couplable food utensil(s) 108 to the magnetic coupling 102. Lifting of the utensil housing 131 off the support base 130 may uncouple the magnetically couplable food utensil(s) 108 from the magnetic coupling 102.

In such embodiments, a food receiving space may be defined in the utensil housing 131 in which food is receivable. The food implement 111 included in the magnetically couplable food utensil(s) 108 may, for example, also be receivable in the food receiving space to contact the food received therein.

A handle 132 may be provided for assisting the user to lift the utensil housing 131 onto and off the support base 130.

In embodiments in which the food implement 111 is in the form of a food processing tool, the utensil housing 131 may comprise a food processor bowl. An example of this is shown in FIG. 1.

In embodiments in which the food implement 111 is in the form of a blender tool, the utensil housing 131 may comprise a blender jar. An example of this is shown in FIG. 2.

Other examples include the utensil housing 131 comprising a cutting bowl or a pan.

In some embodiments, and as best shown in FIGs. 1 and 2, the diameter of the utensil magnetic assembly 109 may automatically define the speed/torque received via the magnetic coupling 102, for example due to the utensil magnetic assembly 109 being, depending on its diameter, coupled to either the first magnetic assembly 114 that is driven at higher speed and lower torque or to the second magnetic assembly 116 that is driven at lower speed and higher torque.

Thus, the diameter of the utensil magnetic assembly 109 may be used to switch between high-speed, lower torque blending when the magnetically couplable food utensil 108 comprises the food implement 111 in the form of a blender tool, and lower speed, higher torque food processing when the magnetically couplable food utensil 108 comprises the food implement 111 in the form of a food processing tool.

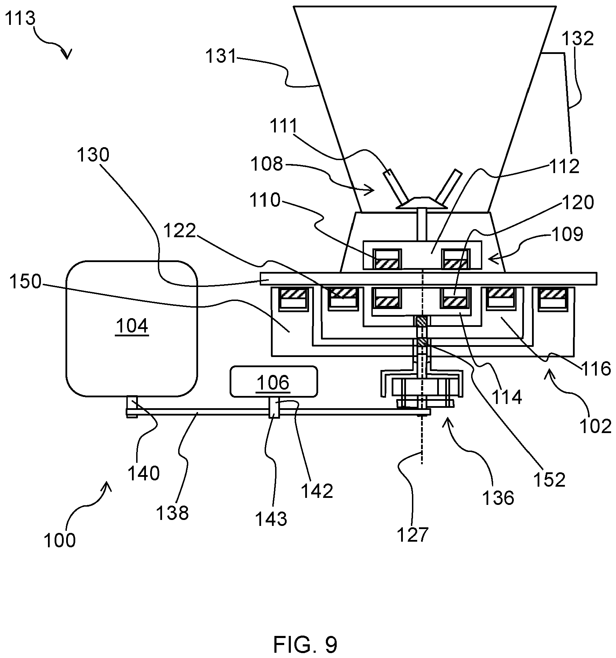

Hence at least two different sizes, e.g. diameters, of the utensil magnetic assembly 109 can be employed. Depending on the design of the magnetic coupling 102, three or four different sizes, e.g. diameters, of the utensil magnetic assembly 109 can be employed. Non-limiting examples of the latter are described herein below with reference to FIGs. 9 to 11.

It is also noted, for the avoidance of doubt, that the magnetic connection may not rely on the diameter of the utensil magnetic assembly 109 being exactly the same as that of one of the magnetic assemblies 114, 116 included in the magnetic coupling 102.

There may be no need to stop operation of the motor assembly 104, 106 when changing food implements 111, e.g. when changing from a food implement 111, e.g. blender tool, that is moved at relatively high speed to a food implement 111, e.g. stirrer, that is moved at lower speed.

Due to the magnetic coupling 102, the user may remove a first magnetically couplable food utensil 108, e.g. a blender tool-comprising magnetically couplable food utensil 108, and position a different magnetically couplable food utensil 108, e.g. a cutting tool-comprising magnetically couplable food utensil 108, on the magnetic coupling 102, for example on the relevant area of the support base 130. In some embodiments, this can be implemented without stopping the motor assembly 104, 106.

In the latter example, the cutting tool-comprising magnetically couplable food utensil 108 may have a larger diameter utensil magnetic assembly 109 which, when located on the magnetic coupling 102, may automatically connect to the lower speed, higher torque second/outer magnetic assembly 116. An example of this is shown in FIG. 1.

It is noted that providing multispeed and/or multi-torque transmission via the magnetic coupling 102 may not require a clutch or other switching means. Both of the first and second magnetic assemblies 114, 116 may rotate at the same time irrespective of which one is being used to drive the magnetically couplable food utensil 108. Alternatively, the first magnetic assembly 114 may be driven by a first motor of the motor assembly 104, 106, and the second magnetic assembly 116 may be driven by a second motor of the motor assembly 104, 106, for example such that one of the first and second magnetic assemblies 104, 106 is moved, e.g. rotated, while the other of the first and second magnetic assemblies 106, 104 is stationary. The latter may be stationary due to the respective motor not being operated or due to being decoupled from the motor, e.g. from a gear assembly 136 coupled to the motor assembly 104, 106.

In some embodiments, such as shown in FIGs. 1 and 2, the food preparation device 100 comprises a heating element 133 for enabling the food preparation device 100 to heat food. Thus, the food preparation device 100 may combine physical manipulation of food via the magnetic coupling 102 with heating of the food. It is also noted that the contactless coupling with the motor assembly 104, 106 provided by the magnetic coupling 102 may enable a receptacle, such as pot, pan, mug, etc., to be heated by the heating element 133 even when a magnetically couplable food utensil 108 is not being used. Thus, the food preparation device 100 can be used in combination with, for example, existing kitchenware, for example with a pan or pot having a diameter of 80 to 320 mm and/or compatible for use with a standard induction cooktop.

The heating element 133 may be of any suitable type. In some embodiments, the heating element 133 comprises, e.g. is, an induction heating element. Such an induction heating element may enable food to be heated with minimal impact of operation of the induction heating element on functioning of moving parts, such as the motor assembly 104, 106 and the magnetic coupling 102. This is because induction heating does not rely on conduction of heat generated in the induction heating element itself.

It is noted that in embodiments in which the heating element 133 comprises the induction heating element, the utensil housing 131, e.g. at least a base portion thereof, may include a ferromagnetic material, e.g. a ferrous material. Heat induced, due to the induction heating element, in the utensil housing 131, e.g. the base portion thereof, may be transferred to food received in the utensil housing 131 via thermal conduction.

The induction heating element may also mean that existing kitchenware, e.g. a pan or pot having a diameter of 80 to 320 mm, compatible for use with a standard induction cooktop can be used in combination with the food preparation device 100.

Referring to FIGs. 1, 2 and 8, the heating element 133 may include an induction coil, for example an induction coil arranged beneath the support base 130, e.g. glass support base 130.

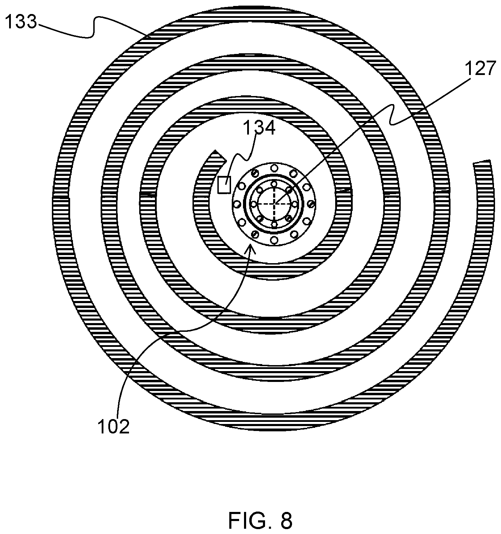

The heating element 133 may be arranged around the magnetic coupling 102, for example, by the induction coil of the induction heating element being arranged around the magnetic coupling 102, as best shown in FIG. 8. This may enable heating functionality to be incorporated into the food preparation device 100 in a spatially efficient manner.

A space may be defined, e.g. cut or formed in some other way, in the heating element 133, e.g. in the center of the heating element 133, for accommodating the magnetic coupling 102.

The space may have any suitable dimensions provided that the space is capable of accommodating the magnetic coupling 102. In some embodiments, the space has a diameter of, for example, 50 to 150 mm, e.g. about 80 mm.

It is generally noted that a lateral dimension, e.g. maximum lateral dimension, of the magnetic coupling 102 may be 20 to 100 mm.

Such a lateral dimension may assist positioning of the heating element 133, e.g. induction coil, around the magnetic coupling 102 in a way that provides heating capability that is akin, for instance, to that provided by a standard induction cooktop to existing kitchenware.

In some embodiments, and with continued reference to FIG. 8, the food preparation device 100 includes a temperature sensor assembly 134 configured to provide a temperature response for controlling the heating element 133.

To this end, the temperature sensor assembly 134 may be arranged such that temperature sensing element(s) thereof contact the support base 130, e.g. an underside of the support base 130. This positioning of the temperature sensing element(s) may assist the temperature sensor assembly 134 to detect a temperature of the magnetically couplable food utensil 108 and/or the utensil housing 131.

The temperature sensor assembly 134 may include a temperature sensor for providing data for temperature feedback control and/or a thermal fuse for protecting against overheating of one or both of the food preparation device 100 and the food preparation assembly 113.

Any suitable type of temperature sensor may be included in the temperature sensor assembly 134 for providing data for temperature feedback control. In some embodiments, the temperature sensor comprises a positive temperature coefficient (PTC) thermistor or a negative temperature coefficient (NTC) thermistor.

Operation of such temperature sensors may be hampered should they be placed, for example, within the magnetic field provided by the induction coil of the induction heating element. For at least this reason, the temperature sensor assembly 134, e.g. at least the temperature sensor thereof, may be interposed between the heating element 133 and the magnetic coupling 102. An example of this is shown in FIG. 8.

In a specific non-limiting example, the temperature sensor assembly 134, e.g. at least the temperature sensor thereof, may be arranged between the heating element 133 and the magnetic coupling 102, with temperature sensing element(s) of the temperature sensor assembly 134 being in contact with the support base 130.

Movement, e.g. rotation, of the first and second magnetic assemblies 114, 116 of the magnetic coupling 102 can be driven by the motor assembly 104, 106 in any suitable manner. In some embodiments, such as shown in FIGs. 1, 2 and 3A, the food preparation device 100 comprises a gear assembly 136 for transferring torque from the motor assembly 104, 106 to the magnetic coupling 102, and in particular to each of the first and second magnetic assemblies 114, 116. Such a gear assembly 136 may assist to ensure that the magnetically couplable food utensil(s) 108 is or are driven by the motor assembly 104, 106 via the magnetic coupling 102 at appropriate speed(s).

For example, a slower rotational speed may be desirable in the case of the food implement 111 in the form of the food processing tool shown in FIG. 1, while a faster rotational speed may be desirable in the case of the food implement 111 in the form of the blender tool shown in FIG. 2.

In some embodiments, the gear assembly 136 comprises a planetary gear assembly. Such a planetary gear assembly may offer a simple yet effective way of rotating the first and second magnetic assemblies 114, 116 at different speeds relative to each other.

The planetary gear assembly may include a sun gear, a ring gear and a plurality of planet gears coupling the sun gear and the ring gear to each other. The planetary gear assembly may be configured so that the ring gear, in other words outer wall of the planetary gear box, rotates more slowly than sun gear, in other words central shaft of the planetary gear box.

In some embodiments, such as shown in FIGs. 1 and 2, the outer magnetic assembly 116 may be coupled, e.g. directly coupled, to the ring gear, and thus may be rotated more slowly than the inner magnetic assembly 114 coupled, e.g. directly coupled, to the sun gear.

In such embodiments, and as shown in FIG. 1, the slower rotation of the ring gear may be used to rotate the food implement 111 in the form of a food processing tool via the outer magnetic assembly 116 directly coupled to the ring gear. Alternatively or additionally, the faster rotation of the sun gear may be used to rotate the food implement 111 in the form of a blender tool via the inner magnetic assembly 114 directly coupled to the sun gear.

The planetary gear assembly may employ any suitable gear ratio, such as 3:1 to 20: 1, e.g. 10:1, with the ring gear rotating at a decreased speed relative to the sun gear.

Still referring to FIGs. 1 and 2, the motor assembly 104, 106 comprises a higher speed motor 104 and a lower speed motor 106. Such a motor assembly 104, 106 may assist, e.g. in combination with the planetary gear assembly, to provide a range of rotational speeds for driving various magnetically couplable food utensils 108 via the magnetic coupling 102.

The higher speed motor 104 may be configured to rotate at 15000 to 50000, e.g. about 20000, revolutions per minute. Alternatively or additionally, the lower speed motor 106 may be configured to rotate at 2 to 10, e.g. about 5 revolutions per minute.

It is noted that inclusion of the higher speed motor 104 and the lower speed motor 106 in the motor assembly 104, 106 may not only deliver appropriate rotational speeds needed for certain applications, but also standard AC and/or DC motors may be used for the higher speed motor 104 and the lower speed motor 106 that may not require complex electronics to operate. Rather, a simple on/off switch may be used to operate each of the higher speed motor 104 and the lower speed motor 106.

Such standard motors may contrast with, for example, brushless DC motors that may require complex electronics to be able to run. Therefore the above-mentioned standard motors may be easier and cheaper to implement in the food preparation device 100 than brushless DC motors.

The higher speed motor 104 may, for example, be an AC motor, e.g. an AC 4 pole power motor, while the lower speed motor 106 may be a stepper motor.

More generally, implementing the different speeds for driving the magnetic coupling 102 may comprise operating, e.g. switching on, either the higher speed motor 104 or the lower speed motor 106.

When the higher speed motor 104 is operating, e.g. by being switched on, and the lower speed motor 106 is not operating, e.g. due to being switched off, the magnetic coupling 102 may be driven at a higher speed than when the lower speed motor 104 is being operated and the higher speed motor is not operating 106.

It is noted that the higher speed motor 104 may be suitable for rotating, via the magnetic coupling 102, the food implement 111 in the form of a blender tool at 15000 to 50000, e.g. about 20000, revolutions per minute. This may be via the higher speed motor 104 directly driving the inner magnetic assembly 114 of the magnetic coupling 102, e.g. via the sun gear of the planetary gear assembly.

The higher speed motor 104 may also be suitable for rotating, via the magnetic coupling 102, the food implement 111 in the form of a food processing tool, at 800 to 1500, e.g. about 1200, revolutions per minute. This may be via the higher speed motor 104 driving the outer magnetic assembly 116 of the magnetic coupling 102, e.g. via the ring gear of the planetary gear assembly.

In more general terms, the gear assembly 136, e.g. planetary gear assembly, may be configured to reduce the number of revolutions per minute of 15000 to 50000, e.g. about 20000, to 800 to 1500, e.g. about 1200, revolutions per minute.

However, even including the gear assembly 136, e.g. planetary gear assembly, low speed stirring functionality may not be feasible when the motor assembly 104, 106 only includes the higher speed motor 104. For example, the lower speed motor 106 may be provided for rotating, via the magnetic coupling 102, the food implement 111 in the form of a stirrer for stirring risotto, at 2 to 10, e.g. about 5 revolutions per minute.

More generally, the higher speed motor 104 and the lower speed motor 106 in combination with the planetary gear assembly may enable the food preparation device 100 to provide (at least) four different rotational speeds.

In some embodiments, such as shown in FIGs. 1 and 2, the food preparation device 100 comprises a belt or chain 138 for coupling the motor assembly 104, 106 to the magnetic coupling 102. Belt transmission may assist to minimize the food preparation device's 100 height, since the motor assembly 104, 106 may be arranged to a side of the magnetic coupling 102, rather than underneath the magnetic coupling 102. Other suitable drive transmissions, e.g. gears, can also be contemplated.

It is generally noted that the speed of the motor(s) of the motor assembly 104, 106 can be adjusted and controlled to offer a relatively broad speed/torque bandwidth and/or enable a smooth start-up of highspeed processing.

The lower and higher speed motor 104, 106 may be employed to broaden the range of speeds to enable speeds to be reached which cannot be achieved with one motor only.

In a relatively simple embodiment, two speed/torque windows can be realized with the two motors of the motor assembly 104, 106 (e.g. for highspeed food processing and kneading respectively) and one magnetic assembly 114 included in the magnetic coupling 102.

In this case, the gear assembly 136, e.g. planetary gear assembly, and the second magnetic assembly 116 may be omitted.

Here simplicity of design is to the exclusion of an intermediate speed/torque window that can otherwise be provided by inclusion of the gear assembly 136, e.g. planetary gear assembly, and the second magnetic assembly 116.

In some embodiments, the belt or chain 138, e.g. timing belt or timing chain 138, may, for instance, couple respective output shafts 140, 142 of the higher speed motor 104 and the lower speed motor 106 with each other and with the magnetic coupling 102, for instance via the gear assembly 136, e.g. planetary gear assembly.

In such embodiments, both of the higher speed and lower speed motors 104, 106 may be connected continuously to the gear assembly 136, e.g. planetary gear assembly, and thus with both of the first and second magnetic assemblies 114, 116 of the magnetic coupling 102, e.g. the coaxial axial flux magnetic coupling 102.

A free run bearing 143 may be coupled, e.g. attached, to the output shaft 142 of the lower speed motor 106, with the free run bearing 143 being configured to enable the lower speed motor 106 to be bypassed when the higher speed motor 104 is operating.

The free run bearing 143 may minimize the risk of, e.g. prevent, interaction between the lower and higher speed motors 104, 106 that may potentially block rotation.

In such embodiments, the lower speed motor 106 may only rotate its output shaft 142 when the lower speed motor 106 is operating.

Alternatively or additionally, a free run bearing may be coupled, e.g. attached, to the output shaft 140 of the higher speed motor 104 and configured to enable the higher speed motor 104 to be bypassed when the lower speed motor 106 is operating.

In embodiments in which a free run bearing 143 is coupled to the output shaft 142 of the lower speed motor 106 and a free run bearing is coupled to the output shaft 140 of the higher speed motor 104, the free run bearings may be differently oriented.

In some embodiments, such as shown in FIGs. 1 and 2, the food preparation device 100 comprises a cooling fan assembly 144, 145 for cooling the motor assembly 104, 106. The cooling fan assembly 144, 145 may also, for instance, cool electronics included in the food preparation device 100. In some embodiments, the cooling fan assembly 144, 145 assists to ensure operation of the motor assembly 104, 106 and the heating element 133, e.g. inductive heating element, at the same time.

The cooling airflow 146 for cooling the motor assembly 104, 106 and the electronics inside the food preparation device 100 can be created by the cooling fan assembly 144, 145 in any suitable manner. In some embodiments, the cooling fan assembly 144, 145 comprises an inlet cooling fan 144 for drawing ambient air into an interior of the food preparation device's 100 housing. Alternatively or additionally, the cooling fan assembly 144, 145 may include an outlet cooling fan 145 for expelling air from the interior of the housing to the food preparation device's 100 surroundings.

The cooling airflow 146 may be directed across the motor assembly 104, 106 and from an inlet at or proximal to a base of the food preparation device 100 to an outlet at or proximal to a top portion of the food preparation device 100.

The inlet cooling fan 144 may, for example, be arranged at the inlet and/or the outlet cooling fan 145 may be arranged at the outlet.

It is noted at this point that the magnetic coupling 102 should not be regarded as being limited to having the first and second magnetic assemblies 114, 116, and in some embodiments, such as shown in FIGs. 9 to 11, the magnetic coupling 102 further comprises a third magnetic assembly 150 (or even fourth or more magnetic assemblies), with the first, second and third magnetic assemblies 114, 116, 150 being magnetically shielded and/or spaced from each other to permit relative movement of the first and second magnetic assemblies 114, 116 with respect to each other, relative movement of the second and third magnetic assemblies 116, 150 with respect to each other and relative movement of the first and third magnetic assemblies 114, 150 with respect to each other.

In such embodiments, the third magnetic assembly 150 may be arranged about the second magnetic assembly 116, with the second magnetic assembly 116 being arranged about the first magnetic assembly 114, for example such that each of the first, second and third magnetic assemblies are concentrically arranged and rotatable about a common axis 127. In the latter example, the magnetic coupling 102 can be regarded as providing at least three concentric couplings that are each capable of providing different speeds and/or torques for driving movement, e.g. rotation, of the magnetically couplable food utensil(s) 108.

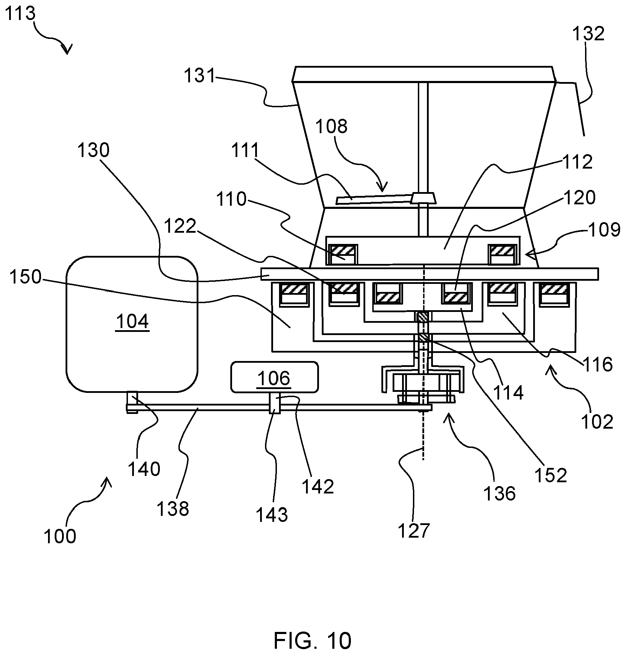

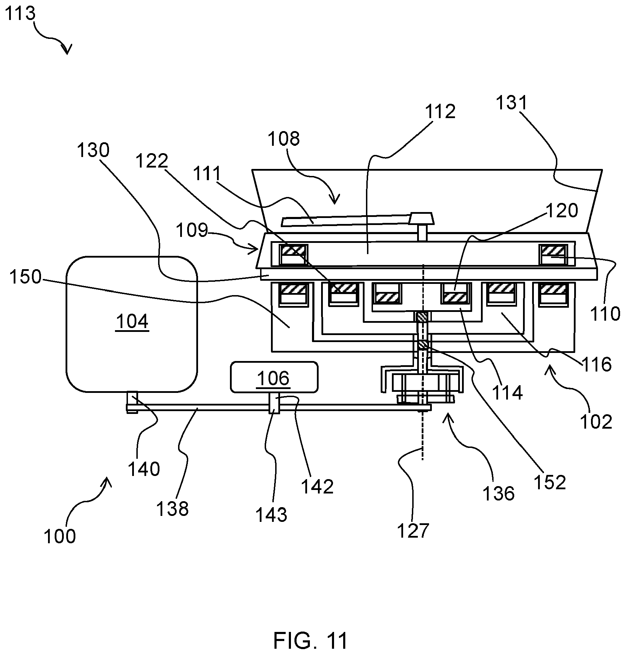

In some embodiments, and referring to FIG. 9, the first, inner, magnetic assembly 114 is employed to drive rotation of a food implement 111 in the form of a blender tool. Alternatively or additionally, and referring to FIG. 10, the second, outer, magnetic assembly 116 may be employed to drive rotation of a food implement 111 in the form of a food processing tool. Alternatively or additionally, and referring to FIG. 11, the third, outermost, magnetic assembly 150 may be employed to drive rotation of a food implement 111 in the form of a stirrer, e.g. a risotto stirrer.

In such embodiments, the first, inner, magnetic assembly 114 may, for instance, be directly driven by the sun gear of the planetary gear assembly, with either the second, outer, magnetic assembly 116 or the third, outermost, magnetic assembly 150 being driven by the ring gear of the planetary gear assembly.

The food preparation device 100 may include a switching assembly 152, e.g. comprising a geometrical form on the drive shaft, that is configurable to enable switching between the second, outer, magnetic assembly 116 and the third, outermost, magnetic assembly 150 being driven by the motor assembly 104, 106, e.g. via the ring gear of the planetary gear assembly.

In FIGs. 9 and 10, the switching assembly 152 is configured so that the second, outer, magnetic assembly 116 is driven by the motor assembly 104, 106, e.g. via the ring gear of the planetary gear assembly. In FIG. 11, the switching assembly 152 is configured so that the third, outermost, magnetic assembly 150 is driven by the motor assembly 104, 106, e.g. via the ring gear of the planetary gear assembly.

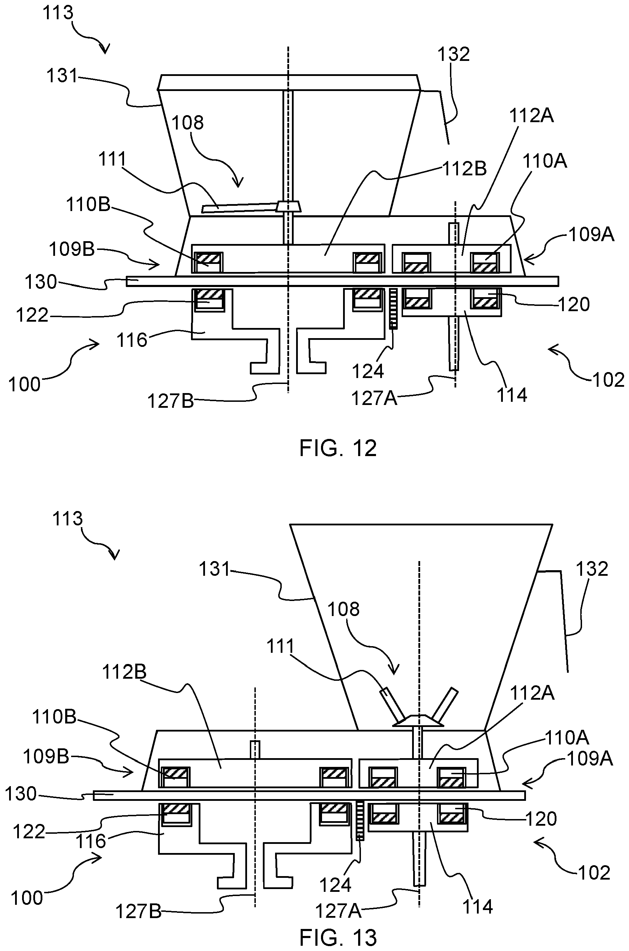

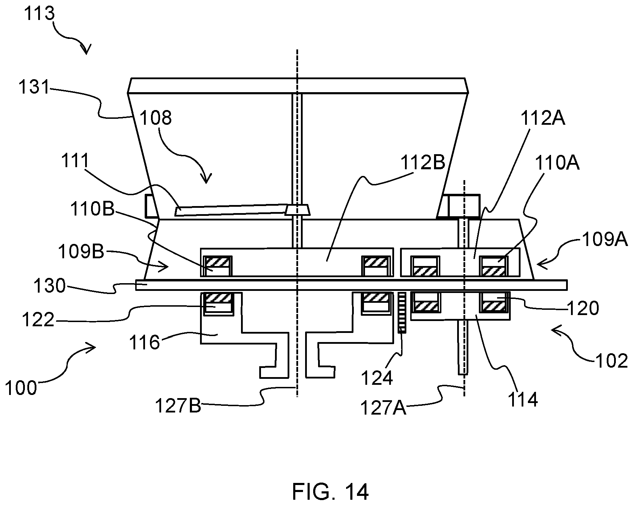

Whilst the embodiments depicted in FIGs. 1 to 10 include a magnetic coupling 102 in which one of the first and second magnetic assemblies 114, 116 is arranged around the other of the first and second magnetic assemblies 116, 114, this is not intended to be limiting, and in other embodiments, such as shown in FIGs. 12 to 14, the first and second magnetic assemblies 114, 116 may be arranged adjacent to each other, e.g. in a side-by-side arrangement.

In such embodiments, the magnetically couplable food utensil(s) 108 may comprise a first utensil magnetic assembly 109A that is magnetically couplable to the first magnetic assembly 114, and a second utensil magnetic assembly 109B that is magnetically couplable to the second magnetic assembly 116.

In some embodiments, the first utensil magnetic assembly 109A includes a plurality of permanent magnets 110A spaced apart from each other and configured to magnetically couple with the first magnetic assembly 114.

Alternatively or additionally, the second utensil magnetic assembly 109B may include a plurality of permanent magnets 110B spaced apart from each other and configured to magnetically couple with the second magnetic assembly 116.

The first utensil magnetic assembly 109A may include a holder 112A for holding magnetic material, e.g. the plurality of permanent magnets 110A, and/or the second utensil magnetic assembly 109B may include a holder 112B for holding magnetic material, e.g. the plurality of permanent magnets 110B.

In embodiments in which the first and second magnetic assemblies 114, 116 are arranged adjacent to each other, e.g. in a side-by-side arrangement, the first magnetic assembly 114 may be rotatable about a first axis 127A and the second magnetic assembly 116 may be rotatable about a second axis 127B. In such embodiments, the first and second axes 127A, 127B may extend parallel to each other.

In the case of the first and second magnetic assemblies 114, 116 being arranged adjacent to each other, e.g. in a side-by-side arrangement, one of the first and second magnetic assemblies 114, 116 may be used to prevent movement, e.g. rotation, of the utensil housing 131 or to drive an auxiliary function, while the other of the first and second magnetic assemblies 116, 114 is driving movement, e.g. rotation, of the food implement 111.

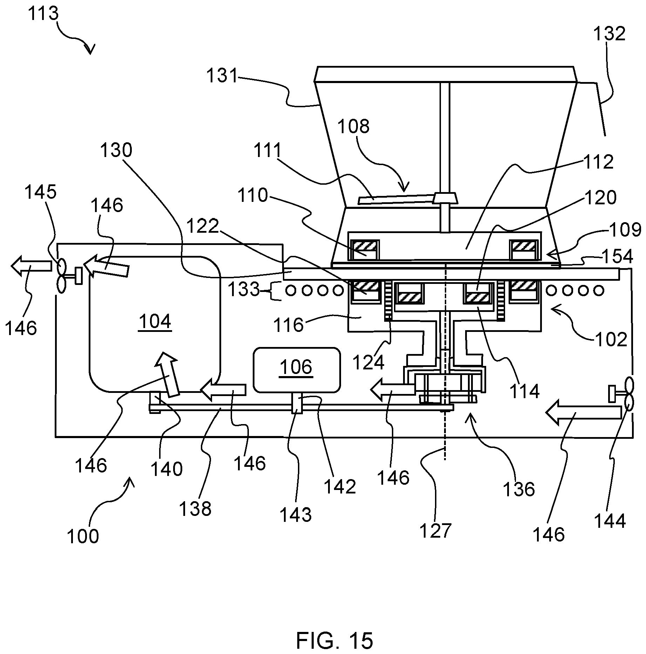

As noted above, the axial spacing between the utensil magnetic assembly 109; 109A, 109B and one or both of the first magnetic assembly 114 and the second magnetic assembly 116 may be minimized, at least in part, by minimizing the thickness of the support base 130. Nonetheless in some embodiments, such as shown in FIG. 15, the magnetically couplable food utensil(s) 108 may include a bottom cover 154, which may be termed an "accessory bottom cover" 154 arranged beneath the utensil magnetic assembly 109; 109A, 109B. The bottom cover 154 may be sufficiently thin to permit interaction between the magnetic coupling 102 and the magnetically couplable food utensil(s) 108.

Thus, the utensil magnetic assembly 109; 109A, 109B may be covered with a bottom cover 154, e.g. a relatively thin bottom cover 154.

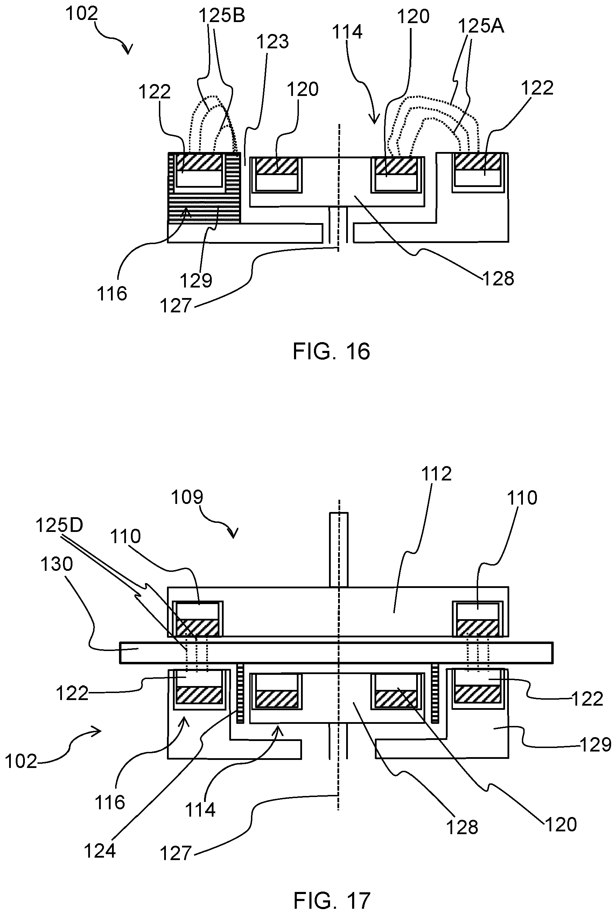

In some embodiments, and referring now to FIG. 16, at least one of the first and second holders 128, 129 may be made, at least partly, from a magnetic shielding material. In other words, the permanent magnets 120, 122 may be held by, e.g. embedded in, a holder 128, 129 made at least partly from a magnetic shielding material.

Such a magnetic shielding material may, for example, comprise soft iron, e.g. iron or ferritic steel.

For example, and as illustrated in FIG. 16, the second holder 129 of the second magnetic assembly 116 may be formed, at least in part, of a magnetic shielding material.

Alternatively or additionally, a statically mounted magnetic shielding material member 124 may be mounted between the first and second magnetic assemblies 114, 116. A non-limiting example of this is shown in FIG. 17.

In such embodiments, the statically mounted magnetic shielding material member 124 may not move together with either of the first and second magnetic assemblies 114, 116.

In some embodiments, such as shown in FIG. 17, the statically mounted magnetic shielding material member 124 may be mounted to the support base 130.

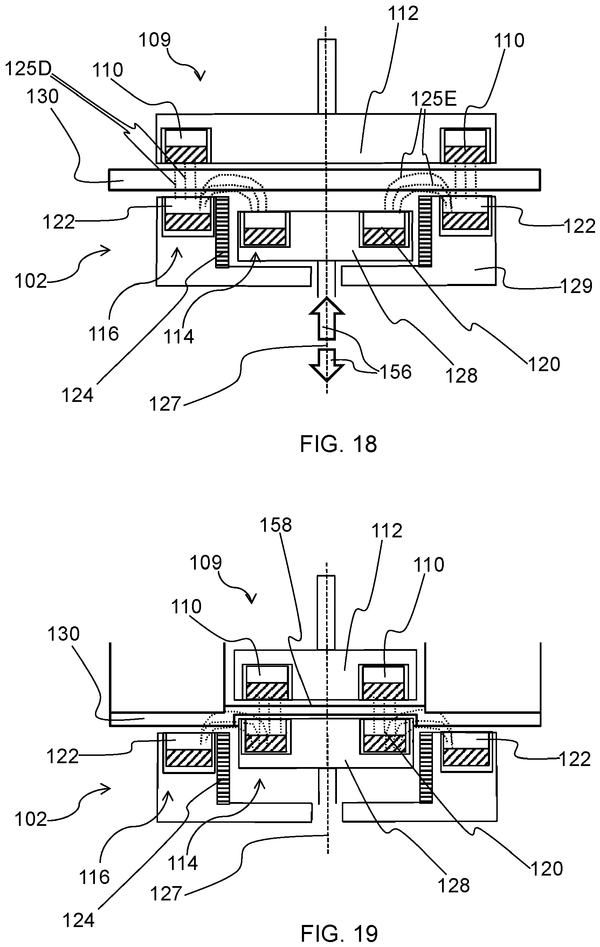

In some embodiments, such as shown in FIG. 18, the first and second magnetic assemblies 114, 116 are axially, e.g. vertically, displaced or displaceable relative to each other.

The axial displacement is denoted in FIG. 18 by the arrows 156. It is noted that this axial displacement may not cause corresponding movement of the magnetically couplable food utensil(s) 108 for processing food.

The inner magnetic assembly 114 may, for instance, be axially moveable along a bore defined in the outer magnetic assembly 116, for example along the common axis 127.

Axial displacement of the first and second magnetic assemblies 114, 116 relative to each other may assist to reduce magnetic interaction between the first and second magnetic assemblies 114, 116.

The magnetic shielding material member 124 may also assist to minimize magnetic interaction between the first and second magnetic assemblies 114, 116, noting that the first and second magnetic assemblies 114, 116 may potentially interact with each other in spite of being axially displaced relative to each other.

In some embodiments, such as shown in FIG. 19, at least part of one of the first and second magnetic assemblies 114, 116, e.g. at least part of the inner magnetic assembly 114, is receivable, e.g. locatable, in a recessed portion 158 of the support base 130.

This arrangement may assist to keep the magnetically couplable food utensil(s) 108 in place and/or prevent rotation of the movement, e.g. rotation, of the utensil housing 131 on the support base 130 (noting that the support base 130 is not entirely flat).

More generally, the food preparation device 100 may be portable, in other words mobile. Alternatively, the food preparation device 100 may be a stand alone or built-in food preparation device 100.

The food preparation device 100 may be in the form of a base station capable of contactlessly driving several magnetically couplable food utensils 108, and, in some embodiments, capable of heating food, e.g. via inductive heating. Such a base station may, for example, be free of any mechanical interface for engaging a food utensil in order to move the food utensil.

Thus, cooking and food processing, e.g. stirring, blending and so on, may be possible at the same time with the desired operating parameters to deliver best functionality for each application.

The food preparation device 100 according to embodiments of the present disclosure may accordingly enable use of various kitchen tools that the user has at home and also dedicated tool(s) corresponding to the magnetically couplable food utensil(s) 108 for food preparation, e.g. including cooking, using a single food preparation device 100, e.g. base station, at the same place and time. It is reiterated that in embodiments in which the food preparation device 100 includes the induction heating element, standard kitchenware that is compatible with an induction cooking plate can be can be used without any adaptation. Such kitchenware can have various dimensions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A food preparation device (100) comprising:
a motor assembly (104, 106) comprising a higher speed motor (104) and a lower speed motor (106); and
a magnetic coupling (102) for coupling the motor assembly to at least one magnetically couplable food utensil (108), the higher speed motor and the lower speed motor being configured to enable the magnetic coupling to be driven at different speeds.

2. The food preparation device (100) according to claim 1, comprising a belt or chain (138) configured to couple the motor assembly (104, 106) to the magnetic coupling (102).

3. The food preparation device (100) according to claim 2, wherein the belt or chain (138) is configured to couple respective output shafts (140, 142) of the higher speed motor (104) and the lower speed motor (106) with each other and with the magnetic coupling (102).

4. The food preparation device (100) according to any one of claims 1 to 3, comprising a free run bearing (143) coupled to a first output shaft (142) of the lower speed motor (106) and configured to enable the lower speed motor to be bypassed when the higher speed motor (104) is operating; and/or a free run bearing coupled to a second output shaft (140) of the higher speed motor and configured to enable the higher speed motor to be bypassed when the lower speed motor (104) is operating.

5. The food preparation device (100) according to any one of claims 1 to 4, comprising a gear assembly (136) for transferring torque from the motor assembly (104, 106) to the magnetic coupling (102); optionally wherein the gear assembly comprises a planetary gear assembly.

6. The food preparation device (100) according to any one of claims 1 to 5, wherein the higher speed motor (104) is configured to rotate at 15000 to 50000 revolutions per minute; and/or the lower speed motor (106) is configured to rotate at 2 to 10 revolutions per minute.

7. The food preparation device (100) according to any one of claims 1 to 6, wherein the magnetic coupling (102) comprises a first magnetic assembly (114) and a second magnetic assembly (116); optionally wherein the first and second magnetic assemblies are magnetically shielded and/or spaced from each other to permit relative movement of the first and second magnetic assemblies with respect to each other and corresponding movement of the magnetically couplable utensil (108) for processing food.

8. The food preparation device (100) according to any one of claims 1 to 6, wherein the magnetic coupling (102) comprises a first magnetic assembly (114) and a second magnetic assembly (116), one of the first and second magnetic assemblies (114, 116) being arranged around the other of the first and second magnetic assemblies; and/or wherein the first and second magnetic assemblies are each rotatable about a common axis (127) of rotation.

9. The food preparation device (100) according to claim 7 or claim 8, wherein the first magnetic assembly (114) comprises a plurality of first permanent magnets (120) spaced apart from each other, and wherein the second magnetic assembly (116) comprises a plurality of second permanent magnets (122) spaced apart from each other; optionally wherein the number of permanent magnets in the plurality of first permanent magnets is different from the number of permanent magnets in the plurality of second permanent magnets.

10. The food preparation device (100) according to any one of claims 7 to 9, comprising a magnetic shielding material (124, 126) for providing magnetic shielding between the first and second magnetic assemblies (114, 116); optionally wherein the magnetic shielding material comprises soft iron.

11. The food preparation device (100) according to claim 10, wherein the magnetic shielding material (124, 126) comprises a magnetic shielding material member (124) included in and moveable together with the second magnetic assembly (116); and/or wherein the magnetic shielding material comprises a magnetic shielding material element (126) included in and moveable together with the first magnetic assembly (114).

12. The food preparation device (100) according to any one of claims 1 to 11, comprising a support base (130) on which the at least one magnetically couplable food utensil (108) is supportable, the support base being configured to enable the magnetic coupling (102) to be magnetically couplable with the at least one magnetically couplable food utensil through the support base so that the at least one magnetically couplable food utensil is, when supported by the support base, moveable via the magnetic coupling.

13. The food preparation device (100) according to any one of claims 1 to 12, comprising a heating element (133) for enabling the food preparation device to heat food, wherein the heating element comprises an induction heating element and/or wherein the heating element is arranged around the magnetic coupling (102).

14. The food preparation device (100) according to claim 13, comprising a temperature sensor assembly (134) configured to provide a temperature response for controlling the heating element (133); optionally wherein the temperature sensor assembly is arranged between the heating element and the magnetic coupling (102).

15. A food preparation assembly (113) comprising:
the food preparation device (100) according to any one of claims 1 to 14; and
at least one magnetically couplable food utensil (108) to which the magnetic coupling (102) of the food preparation device (100) is couplable to enable the at least one magnetically couplable food utensil to be moveable by the motor assembly (104, 106) via the magnetic coupling; optionally wherein the at least one magnetically couplable food utensil comprises a first magnetically couplable food utensil couplable to the magnetic coupling; and a second magnetically couplable food utensil, different from the first magnetically couplable food utensil, couplable to the magnetic coupling.
